# EUROPEAN PATENT APPLICATION

(11) **EP 3 280 182 A1**
(43) Date of publication of application: **07.02.2018**
(21) Application number: 16305996.7
(22) Date of filing: 01.08.2016
(51) Int. Cl.: H04W 36/24

(54) **METHOD, SYSTEM AND COMPUTER PROGRAM PRODUCT FOR OPERATING ONE OR MORE WIRELESS LOCAL AREA NETWORKS**

(71) Applicant: ALCATEL LUCENT, 92100 Boulogne-Billancourt (FR)
(72) Inventor: Gacanin, Haris, 2018 Antwerpen (BE)
(74) Representative: Land, Addick Adrianus Gosling

(57) **Abstract**

Method of operating one or more wireless local area networks, comprising a number of user devices and a plurality of wireless access points, the method comprising: obtaining, for each user device connected to a respective serving access point from among the plurality of access points, connection data comprising an indicator for the serving access point; and calculating, for each connected user device, a mobility parameter based on the obtained connection data.

## Description

### Field of Invention

The present invention relates to wireless communication in a wireless local area network. Specific embodiments relate to operating one or more wireless local area networks comprising a number of user devices and a plurality of wireless access points.

### Background

Wireless technologies such as Wi-Fi access are widely used for indoor and outdoor wireless data services. Wi-Fi is a technology that allows electronic devices to connect to a wireless local area network (WLAN) based on the IEEE 802.11 standards, mainly using the 2.4 gigahertz and 5 gigahertz radio bands. Both private and public Wi-Fi networks are available. This is achieved by creating public and private network service set identifiers (SSIDs) that are periodically broadcasted by access points. Private SSIDs can be set by the customers themselves, while public SSIDs are set by the operators. The use of public Wi-Fi networks, comprising one or more wireless local area networks, for instance as part of a home internet service or mobile phone subscription, is greatly increasing. To enable a user to access such a public Wi-Fi network, a plurality of access points is available at various locations to which a user device can connect.

### Summary

According to a first aspect there is provided a method of operating one or more wireless local area networks comprising a number of user devices and a plurality of wireless access points, the method comprising:
- obtaining, for each user device connected to a serving access point from among the plurality of access points, connection data comprising an indicator for the serving access point; and
- calculating, for each connected user device, a mobility parameter based on the obtained connection data.

Embodiments of the invention are based, among other things, on the advantage that the mobility parameter for the user devices as calculated by the above method allows for the wireless local area network(s) to be operated also according to the mobility of the user devices and will allow for an increased efficiency of operating a network comprising a plurality of access points. The mobility parameter may be a parameter that indicates an expectancy of a user device to disconnect from a serving access point within a certain amount of time. A user who is moving around in, for instance, a town or a street with multiple access points, a change of serving access point to which the user device is connected to another access point is required. At the same time, more user devices may be connected to the access points, such as a user who is not moving around having a user device connected to the same access point. This may, for instance, result in certain access points to have a relatively large number of connected user devices compared to other, perhaps neighboring, access points. This may, for instance, result in a poor connection quality for certain users connected to access points with a relatively large number of connected user devices. Knowing the mobility parameter of the user device allows for optimizing the network taking the mobility of the user device into account.

According to a preferred embodiment, the method further comprises performing an enhancing function for enhancing the capacity and/or quality of the wireless local area network for at least one of the plurality of access points based on the calculated mobility parameter. The enhancing function may be performed based on comparing a total number of connected user devices of the at least one access point with a number of devices determined to be mobile, i.e. devices that move a lot and hence disconnect/reconnect often to one ore more of the access points. If the number of mobile devices compared to the total number of connected devices is low, the enhancing function may be performed. If the number of mobile devices compared to the total number of connected devices, the enhancing function may not be performed, because it may be expected that most of the mobile user devices will disconnect within a relatively short period of time. The mobility parameter may further be used to estimate a future number of connected devices to the access points.

According a further embodiment, the method is performed at a computing device that is configured to remotely manage the plurality of access points, the method further comprising updating a database with the obtained connection data and a time of obtaining the connection data, wherein the database comprises a list of the user devices and a list of the access points. Although the method may be performed by the access points, by performing the method at a computing device in the network that remotely manages the access points, the obtained mobility parameter for the user devices may be obtained at a single location for the whole network. Then, the remote computing device can manage one or more of the access points based on the mobility parameter obtained at one location. The mobility parameter may be calculated for a specific user device for a certain time period based on a list of access points that the specific user device was connected to per time unit.

According to a further embodiment, the mobility parameter is calculated based on connection data obtained for two or more times or time periods. In this way, the mobility parameter may be estimated based on statistics about how often a user device switches between access points, which is an indication the level of movement of the user device. The obtaining may be done for instance every minute, 2 minutes, 5 minutes, 10 minutes, 15 minutes, 20 minutes or 30 minutes.

According to a further embodiment, the connection data is obtained from the user device, from the plurality of access points, or both. The ability to obtain the connection data from either the access point or user device or both makes the method more robust. Another option for obtaining may be used if, for instance, the preferred option does not give the expected results. For instance, if a user device was connected to an access point earlier, but at the time of obtaining the connection data is not connected, then no connection data may be obtained or this particular user device. Then, the data may be obtained from one of the plurality of access points to which the particular user device was connected.

The connection data may be obtained from the user device through the Open Mobile Alliance Device Management (OMA-DM) protocol. The connection data may be obtained from the access points using the TR-069 CPE WAN Management Protocol. It will be understood that at present is not possible to obtain a mobility parameter directly through said protocols.

According to a further embodiment, the connection data comprises one or more of service set identifiers (SSID), basic service set identifiers (BSSID) being a label for the access points and the user devices, and/or received signal strength indicators (RSSI) for at least one of the plurality of access points at one or more user devices, wherein the indicator comprises a basic service set identifier for the respective serving access point. These values may each be added to the database. It will be understood that the BSSID's may for instance be MAC-addresses of the access points and the user devices. It will be further understood that SSID's serve to identify one or more wireless local area networks that may be accessed at certain access points.

According to a further embodiment, the enhancing function comprises at least one of load balancing and interference management. Load balancing may for instance be done for specific access points with relatively high load compared to other neighboring access points. Such high loads may result in a poor connection quality for connected user devices, especially in case the load is high relative to a capacity of the access point. Load balancing may for instance be done by moving certain user devices to a neighboring access point within range of the certain user devices if such a neighboring access point has a lower load, or expected future load, then the serving access point to which the certain user device is presently connected. The mobility parameter may be used to optimize the load balancing, since a user device that is expected to disconnect from the access point any way will not have to be moved to another neighboring access point. On the other hand, if a mobility parameter for a specific user device indicates it is unexpected that a user device will move, but for which user device another access point is in range, that user device may be connected to the other neighboring access point. This increases the efficiency of load balancing, as it removes many unneeded reconnections of devices that will move away from an overloaded, or soon expected to be overloaded, access point.

Interference management may be done based on the obtained RSSI's or, as will be understood, based on other values. Other values used to obtain a level of interference may be channel information of the connection between the serving access points and user devices, wherein the channel information may be included in the connection data. The RSSI's may be obtained from the user devices, for instance through the OMA-DM protocol. Using the RSSI and channel information, a certain user device connected to a serving access point may be determined to suffer from high interference from neighboring interfering access points. The interfering access points may be managed or may not may not be managed. An interference management enhancing function may be run on the serving access point. For instance, a channel may be changed to another channel if less interference is expected for that channel. The mobility parameter, which indicates an expected movement of a user device, may indicate that a certain channel is expected to have a lower interference than another channel if user devices in the certain channel are expected to move away from the serving access point.

According to a further embodiment, the mobility parameter indicates a probability of disconnecting by the user device from the serving access point, wherein one or more of the user devices is preferably marked as a device suitable for connection to another respective serving access point when the probability of disconnecting for respective marked devices is below a predetermined value, and wherein the load balancing comprises connecting the marked user devices to respective another serving access points if the respective another serving access points are within a connection range of the respective marked user device and if the load of the respective another serving access points are lower than the load of the respective serving access points. The probability of disconnecting of the user device may be calculated based on the connection data, since the connection data comprises data of respective access points that respective user devices are connected at certain points in time.

According to a second aspect, there is provided a system for operating one or more wireless local area network comprising a number of user devices and a plurality of wireless access points, the system comprising:
- an obtaining unit configured to obtain, for each user device connected to a respective serving access point from among the plurality of access points, connection data comprising an indicator for the respective serving access point; and
- a processor configured to calculate, for each connected user device, a mobility parameter based on the obtained connection data.

According to an embodiment, the processor is further configured to perform an enhancing function for enhancing the capacity and/or quality of the wireless local area network for at least one of the plurality of access points based on the calculated mobility parameter.

According to an embodiment, the system further comprises a computing device that is configured to remotely manage the plurality of access points and a storage device for storing a database comprising a list of the user devices and a list of the access points, wherein the computing device is further configured to update the database with the obtained connection data and a time of obtaining the connection data. The obtaining unit, processor, and/or storage device may be comprised in a single device, for instance in the computing device.

According to an embodiment, the obtaining unit is configured to obtain the connection data from the user device, from the plurality of access points, or both.

According to an embodiment, the connection data further comprises one or more of service set identifiers (SSID), basic service set identifiers (BSSID) being a label for the access points and the user devices, and/or received signal strength indicators (RSSI) for at least one of the plurality of access points at one or more user devices, wherein the indicator comprises a basic service set identifier for the respective serving access point.

According to an embodiment, the enhancing function comprises at least one of load balancing and interference management.

According to an embodiment, the mobility parameter indicates a probability of disconnecting by the user device from the serving access point,
wherein one or more of the user devices is preferably marked as a device suitable for connection to another respective serving access point when the probability of disconnecting for respective marked devices is below a predetermined value, and
wherein the load balancing comprises connecting the marked user devices to respective another serving access points if the respective another serving access points are within a connection range of the respective marked user device and if the load of the respective another serving access points are lower than the load of the respective serving access points.

According to a further aspect, there is provided a computer program product comprising computer-executable instructions for performing the method of any one method according to any one of the steps of any one of the embodiments disclosed above, when the program is run on a computer.

According to a further aspect, there is provided a computer program comprising computer-executable instructions to perform the method according to any one of the steps of any one of the embodiments disclosed above, when the program is executed on a computer.

According to a further aspect, there is provided a computer device or other hardware device programmed to perform one or more steps of any one of the embodiments of the method disclosed above.

According to another aspect there is provided a data storage device encoding a program in machine-readable and machine-executable form to perform one or more steps of any one of the embodiments of the method disclosed above.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Fig. 1 is a flowchart illustrating an embodiment of an exemplary method of operating one or more wireless local area networks;
Fig. 2 is a flowchart illustrating another embodiment of an exemplary method of operating one or more wireless local area networks;
Fig. 3 is a schematic drawing of an exemplary embodiment of a system for operating one or more wireless local area networks; and
Fig. 4 schematically illustrates a network of wireless access points serving multiple user devices, wherein the access points are remotely managed by a computing device;
Fig. 5 is a graph illustrating an example of connection data from which a mobility parameter may be calculated for a user device that is connected to different access points in time;
Fig. 6 is a graph illustrating another example of connection data from which a mobility parameter may be calculated for another user device that is connected to different access points in time.

### Description of embodiments

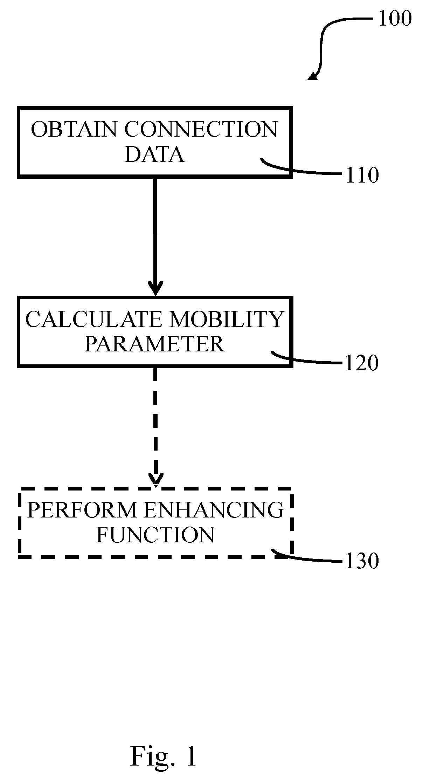

Fig. 1 illustrates a method 100 of operating one or more wireless local area networks (WLAN's) comprising a number of user devices and a plurality of wireless access points, the method comprising:
- step 110 of obtaining, for each user device connected to a serving access point from among the plurality of access points, connection data comprising an indicator for the serving access point; and
- step 120 of calculating, for each connected user device, a mobility parameter based on the obtained connection data.

The one or more WLAN's may be comprised in a network, such as a public WiFi network.

According to a preferred embodiment, the method 100 further comprises step 130 of performing an enhancing function for enhancing the capacity and/or quality of the wireless local area network for at least one of the plurality of access points based on the calculated mobility parameter.

According to a further embodiment, the connection data is obtained in step 110 from the user device, from the plurality of access points, or both.

According to an embodiment further embodiment, in the method 100 the mobility parameter is calculated in step 120 based on connection data obtained for two or more times or time periods. In this way, the mobility parameter may be estimated based on statistics about how often a user device switches between access points, which is an indication the level of movement of the user device. The obtaining in step 110 may be done for instance every minute, 2 minutes, 5 minutes, 10 minutes, 15 minutes, 20 minutes or 30 minutes.

The connection data obtained in step 110 may be obtained from the user device through the Open Mobile Alliance Device Management (OMA-DM) protocol. The connection data may be obtained from the access points using the TR-069 CPE WAN Management Protocol. It will be understood that at present is not possible to obtain a mobility parameter directly through said protocols. It will be further understood that other suitable protocols may be used.

According to a further embodiment, the connection data obtained in step 110 comprises one or more of service set identifiers (SSID), basic service set identifiers (BSSID) being a label for the access points and the user devices, and/or received signal strength indicators (RSSI) for at least one of the plurality of access points at one or more user devices, wherein the indicator comprises a basic service set identifier for the respective serving access point. It will be understood that the BSSID's may for instance be MAC-addresses of the access points and the user devices. It will be further understood that SSID's serve to identify one or more wireless local area networks that may be accessed at certain access points.

According to a further embodiment, the enhancing function that may be performed in step 130 comprises at least one of load balancing and interference management.

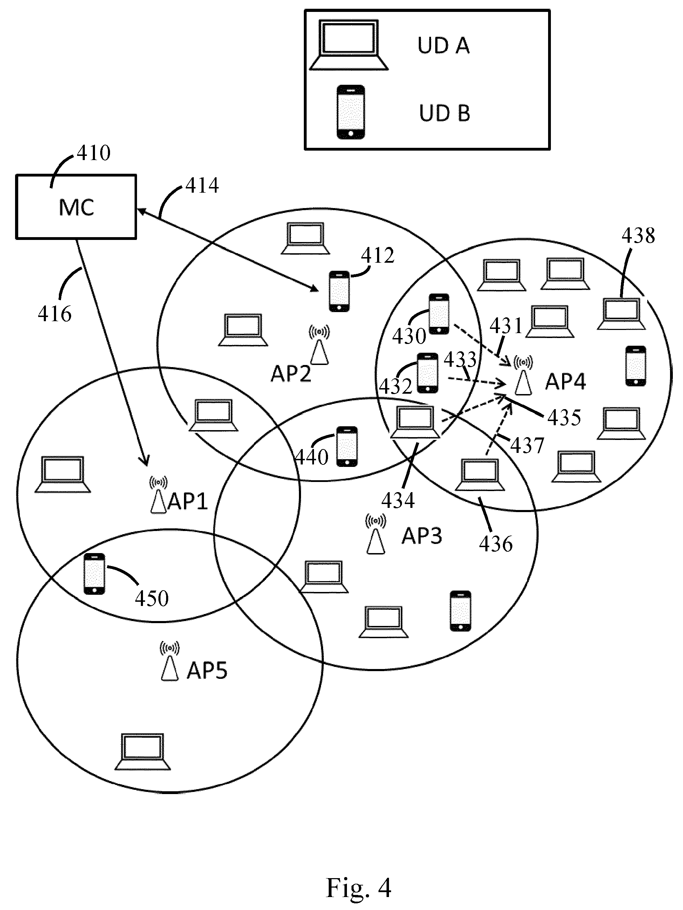

According to a further embodiment, the mobility parameter calculated in step 120 indicates a probability of disconnecting by the user device from the serving access point, wherein one or more of the user devices is preferably marked as a device suitable for connection to another respective serving access point when the probability of disconnecting for respective marked devices is below a predetermined value, and wherein the load balancing comprises connecting the marked user devices to respective another serving access points if the respective another serving access points are within a connection range of the respective marked user device and if the load of the respective another serving access points are lower than the load of the respective serving access points. The probability of disconnecting of the user device may be calculated based on the connection data, since the connection data comprises data of respective access points that respective user devices are connected at certain points in time. Examples of obtained connection data and examples of calculating the mobility parameter are described below with reference to Figs. 4, 5 and 6.

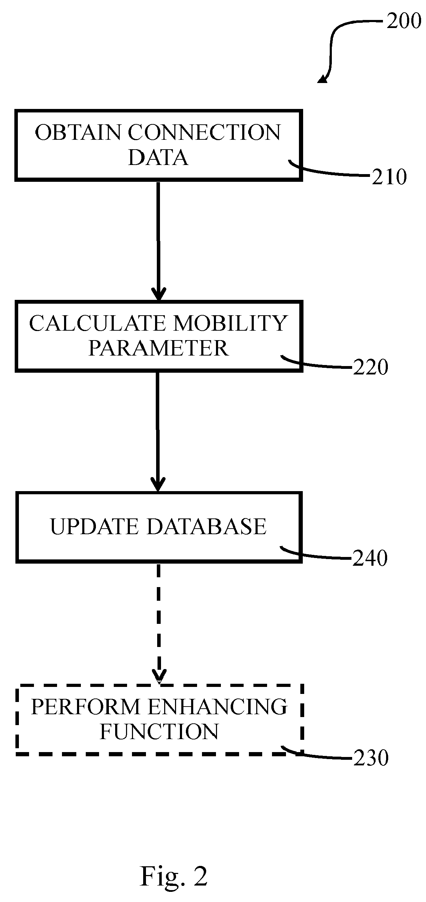

Fig. 2 illustrates another embodiment of an exemplary method of operating a network of wireless local area networks. Method 200 is performed at a computing device that is configured to remotely manage the plurality of access points, the method further comprising step 240 of updating a database with the obtained connection data and a time of obtaining the connection data, wherein the database comprises a list of the user devices and a list of the access points.

According to a preferred embodiment, the method 200 further comprises step 230 of performing an enhancing function for enhancing the capacity and/or quality of the wireless local area network for at least one of the plurality of access points based on the calculated mobility parameter.

According to a further embodiment, the connection data is obtained in step 210 from the user device, from the plurality of access points, or both.

According to an embodiment, in the method 200 the mobility parameter is calculated in step 220 based on connection data obtained for two or more times or time periods. In this way, the mobility parameter may be estimated based on statistics about how often a user device switches between access points, which is an indication the level of movement of the user device. The obtaining in step 210 may be done for instance every minute, 2 minutes, 5 minutes, 10 minutes, 15 minutes, 20 minutes or 30 minutes.

According to a further embodiment, the connection data obtained in step 210 comprises one or more of service set identifiers (SSID), basic service set identifiers (BSSID) being a label for the access points and the user devices, and/or received signal strength indicators (RSSI) for at least one of the plurality of access points at one or more user devices, wherein the indicator comprises a basic service set identifier for the respective serving access point. These values may each be added to the database in step 240.

According to a further embodiment, the enhancing function that may be performed in step 230 comprises at least one of load balancing and interference management.

According to a further embodiment, the mobility parameter calculated in step 220 indicates a probability of disconnecting of the user device to another serving access point, wherein one or more of the user devices is preferably marked as a device suitable for connection to another respective serving access point when the probability of disconnecting for respective marked devices is below a predetermined value, and wherein a load balancing of the enhancing function step 230 comprises connecting the marked user devices to respective another serving access points if the respective another serving access points are within a connection range of the respective marked user device and if the load of the respective another serving access points are lower than the load of the respective serving access points.

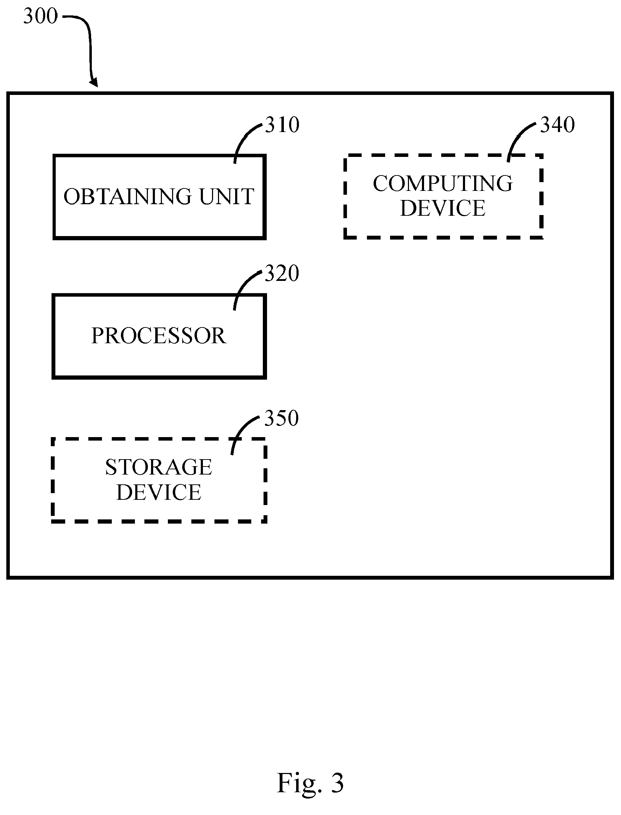

Fig. 3 illustrates an embodiment of a system 300 for operating a wireless local area network, comprising a number of user devices and a plurality of wireless access points, the system comprising:
- an obtaining unit 310 configured to obtain, for each user device connected to a respective serving access point from among the plurality of access points, connection data comprising an indicator for the respective serving access point; and
- a processor 320 configured to calculate, for each connected user device, a mobility parameter based on the obtained connection data.

According to an embodiment, the processor 320 is further configured to perform an enhancing function for enhancing the capacity and/or quality of the wireless local area network for at least one of the plurality of access points based on the calculated mobility parameter.

According to an embodiment, the system further comprises a computing device 340 that is configured to remotely manage the plurality of access points and a storage device 350 for storing a database comprising a list of the user devices and a list of the access points, wherein the computing device is further configured to update the database with the obtained connection data and a time of obtaining the connection data. The obtaining unit 310, processor 320, and/or storage device 350 may be comprised in a single device, for instance in the computing device 340.

According to an embodiment, the obtaining unit 310 is configured to obtain the connection data from the user device, from the plurality of access points, or both.

According to an embodiment, the connection data obtained by obtaining unit 310 further comprises one or more of service set identifiers (SSID), basic service set identifiers (BSSID) being a label for the access points and the user devices, and/or received signal strength indicators (RSSI) for at least one of the plurality of access points at one or more user devices, wherein the indicator comprises a basic service set identifier for the respective serving access point.

According to an embodiment, the enhancing function performed by the processor 320 comprises at least one of load balancing and interference management.

According to an embodiment, the mobility parameter calculated by the processor 320 indicates a probability of disconnecting by the user device from the serving access point, wherein one or more of the user devices is preferably marked as a device suitable for connection to another respective serving access point when the probability of disconnecting for respective marked devices is below a predetermined value, and wherein the load balancing performed by the processor 320 comprises connecting the marked user devices to respective another serving access points if the respective another serving access points are within a connection range of the respective marked user device and if the load of the respective another serving access points are lower than the load of the respective serving access points.

Fig. 4 schematically illustrates a network 400 of wireless access points AP1, AP2, AP3, AP4 and AP5 serving multiple user devices (UD's), such as a laptop "UD A" or a mobile phone "UD B", wherein the access points are remotely managed by a computing device, management center (MC) 410, which may be computing device 340.

In the network 400, arrow 416 indicates that the MC remotely manages AP1. For sake of brevity, only this one arrow is indicated. MC may, however, also manage AP2, AP3, AP4 and AP5. In this example, AP5 is not managed by the MC.

Arrow 414 further indicates that user device 412 (a mobile phone) is part of the network and that connection data may be obtained by the MC from UD 412, for instance through the OMA-DM protocol. Table 1 illustrates an example of obtained connection data from, for instance, UD 412. In Table 1, a BSSID such as a MAC-address for various AP's that are detected by UD 412 are sent, with respective data on RSSI values and channel information. Arrow 414 is shown by way of example for UD 412 and it will be understood that other UD's may also provide connection data.

**Table 1**

| **BSSID (MAC)** | **RSSI** | **channel** |
|---|---|---|
| BSSID(1) | RSSI(1) | Ch(1) |
| BSSID(2) | RSSI(2) | Ch(2) |
| BSSID(3) | RSSI(3) | Ch(3) |
| BSSID(4) | RSSI(4) | Ch(4) |
| : | : | : |
| BSSID(N) | RSSI(N) | Ch(N) |

According to an embodiment, the MC may then calculate a signal level based on the RSSI. The signal level may be indicated by a scale with values ranging from 1 to 5, for instance 2, 3, or 4. A signal level of 5 may indicate that a UD, when connected to this specific AP, will have a sufficient connection quality. On the other hand, a signal level of 1 may indicate that the respective AP will not be able to provide a connection of sufficient quality for the UD, in this case UD 412.

The connection data, for example of Table 1, may comprise data on access points that are not managed by the MC. AUD may thus not be moved to unmanaged access points, for instance during an enhancing function such as load balancing. For instance, in fig. 4, AP5 may be unmanaged. Therefore, UD 450 may not be reconnected from AP1 to AP5 in case UD 450 was connected to AP1. However, information on unmanaged AP's such as RSSI's and channel information may be used to obtain interference levels from these unmanaged AP's.

According to an embodiment, the AP's may also provide connection data to the MC. In this case, the connection data will comprise data on which UD's are connected, with an indication of the respective BSSID's of the UD's.

According to an embodiment, both connection data from the UD's and the AP's may be obtained by the MC. In this way, this combined connection data may for instance be used to do an internal check on the connection data.

According to an embodiment, for the obtaining connection data by the MC, a selection of AP's and/or UD's may be done before the obtaining of the connection data. For instance, it may be that during an earlier time the connection data for AP1 and/or UD 450 indicated that there are only a limited number of UD's connected. Therefore, connection data may only be obtained after larger time periods, such as 30 minutes. During these 30 minutes, however, for example connection data for AP4 and/or UD's connected to UP4 including UD 430, 432, 434, 436 and/or 438 may be obtained more frequently, at shorter time intervals, such as 5 minutes or 10 minutes. This more frequent obtaining may be done because it was observed in a previous time that AP4 had a large number of UD's connected. Further criteria for such an obtaining frequency may be the mobility parameters for the varying UD's.

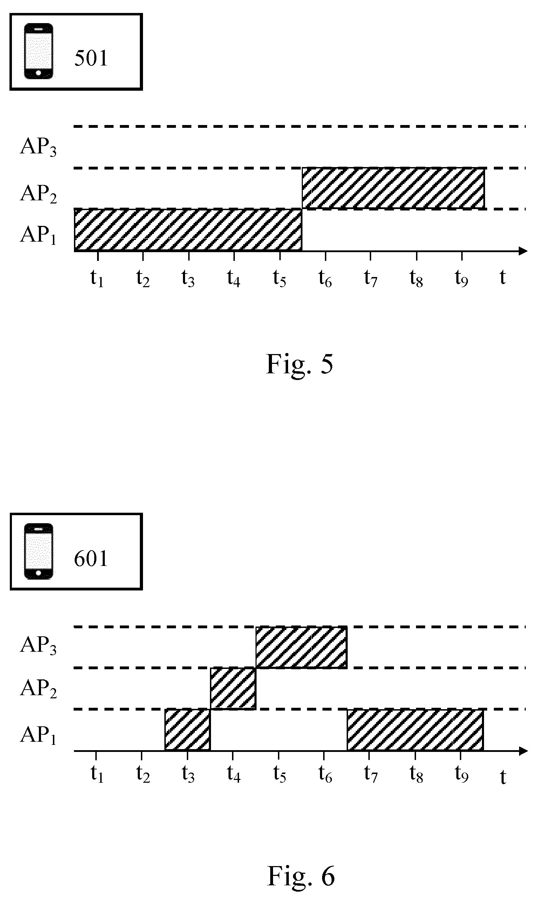

Figs. 5 and 6 show obtained connection data for respectively UD 501 and UD 601, which are also given in Table 2 below.

**Table 2**

| **t** | **AP(N) 501** | **AP(N) 601** |
|---|---|---|
| t1 | 1 | 0 |
| t2 | 1 | 0 |
| t3 | 1 | 1 |
| t4 | 1 | 2 |
| t5 | 1 | 3 |
| t6 | 2 | 3 |
| t7 | 2 | 1 |
| t8 | 2 | 1 |
| t9 | 2 | 1 |

In Fig. 5, it is indicated that UD 501 was connected to AP1 at times t₁, t₂, t₃, t₄, and t₅ for which connection data was obtained. Thereafter, UD 501 connected to AP2, which may have another location, during times t₆, t₇, t₈, t₉. A mobility parameter may be calculated for UD 501 for instance by taking the number of switches between AP's made during a certain period of time and dividing that with the certain period of time, wherein "switching" indicates disconnected from a first AP and connecting to a second AP. For instance, the full shown period of time between t₁ and t₉ may be used for this calculation, and may for example be 9 minutes. UD 501 switched once in that time, from AP1 to AP2. Hence, the mobility parameter may be calculated as 1/9 = 0.11. This may indicate a low expectancy that UD 501 will move, i.e. a relatively low mobility parameter.

In Fig. 6, it is indicated that UD 601 was not connected to any AP part of the network during times t₁ and t₂. Thereafter, UD 601 was connected to AP1 at time t₃, was thereafter connected to AP2 at time t₄. Then, UD 601 connected to AP3 during times t₅ and t₆. Hereafter, UD 601 was connected again to AP1 at times t₇, t₈, t₉. A mobility parameter may be calculated for UD 601 in the same way as for UD 501. UD 601 switched 4 times within the time period from t₁ to t₉, also counting switching from no AP to AP1 at time t₃. Hence, a mobility parameter may be calculated to be 4/9 = 0.44. Compared to UD 501, the mobility parameter of UD 601 indicates a higher mobility.

In an embodiment, the UD's may be indicated to have a mobility level between 1 and 5, such as 2, 3 or 4, based on the mobility parameter, wherein the expectancy of moving for a UD increases with the mobility level. For example, UD 601 may be marked as having a mobility level of 5, and UD 501 may be marked to have a mobility level of 2.

It will be understood that there are more possibilities of calculating a mobility parameter. For instance, in an embodiment, the time period between switching between AP's for a UD may be taken into account, for instance as a weighting factor. In another embodiment, also the distance between access points may be taken into account, if locations of access points are known. Then the speed of movement of a UD may be estimated and taken into account when calculating a mobility parameter for the UD. A higher estimated speed may thus increase the calculated mobility parameter.

Referring again to fig. 4, in an example, AP4 is serving a large number of connected UD's compared to neighboring AP's, such as AP2 and AP3. The users operating the UD's connected to AP4 may encounter poor connection quality, if for instance the capacity of AP4 is fully used. Then, the MC may perform an enhancing function for AP4. In an embodiment, the enhancing function may be a load balancing. UD's 430, 432 and 434 are in this example connected to AP4, as indicated by arrows 431, 433 and 435 respectively. UD's 430, 430 and 434 are, in this example, within range of AP2, which has less UD's connected. The load balancing may thus cause the UD's 430, 432 and/or 434 to connect to AP2. Then, less UD's are connected to AP4 which may improve the connection quality observed by the users operating the UD's connected to AP4 and the UD's that were moved to AP2. UD 434, which is also in range of AP3, may be connected to AP3 instead of AP2.

UD 436 is connected to AP4 as indicated by arrow 437 and may have a mobility parameter that indicates that it is not expected to move to another AP, *i.e.* that UD 438 is not considered mobile. This may be done, for instance, by labeling UD 438 to have a mobility level of 1. Thus, UD 436 may be moved to AP3 if the connection data indicates that a sufficient connection quality between UD 436 and AP3 may be achieved. This connection quality may be indicated by the signal level calculated from the RSSI.

In an embodiment, if many of the UD's that may be connected to another neighboring AP have a mobility level of 4 or 5, the MC may decide not to perform enhancing function such as load balancing, since there is a high expectancy that at least some of these UD's will connect to another AP anyway. The MC may decide to perform a different function, such as an interference management function. In this case, for example if AP2 and/or AP3 are interfering with AP4 a channel and/or a transmitting power may be changed for either of the AP's.

In an embodiment, a database of the connection data may be stored for a certain number of times. Table 3 below shows example data that may be stored in the database.

**Table 3**

| **time** = **t₃** | **UD(1)** | **UD(2)** | **UD(3)** | **...** | **UD(M)** |
|---|---|---|---|---|---|
| **AP(1...N)** | 1 | 1 | 4 | ... | N |
| **RSSI** | RSSI(1...N) | RSSI(1...N) | RSSI(1...N) | ... | RSSI(1...N) |
| **Sign. Level (1-5)** | 5 | 5 | 3 | ... | 1 |
| **Mob. Par** | 0.2 | 0.4 | 0.05 | ... | 0.1 |
| **Mob. Level (1-5)** | 3 | 5 | 1 | ... | 2 |

In Table 3, data is shown for a certain time equal to t₃. Herein, the columns indicate the UD's present in the network. The first row indicates to which AP the respective UD is connected, herein indicated with a number referring to, for instance AP1 when the number is 1. It will be understood that this may also be a BSSID such as a MAC-address.

Further, the table comprises RSSI values obtained from the UD's. Since there may be RSSI values for more than just the AP to which a UD is connected, the RSSI's obtained from each UD may be arrays of RSSI values comprising values for AP's 1...N, depending on which AP's are within range. Also RSSI values for unmanaged AP's may be comprised in these data. The RSSI's may then be converted to signal levels, as described above. Calculated mobility parameters are furthermore indicated in Table 3, and may be converted to mobility levels as described above.

The above embodiments of operating a network of wireless local area networks have the advantage in an enhanced connection quality and/or capacity for the individual AP's and/or the entire network.

According to a further aspect, there is provided a computer program product comprising computer-executable instructions for performing the method of any one method according to any one of the steps of any one of the embodiments disclosed above, when the program is run on a computer.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "units", "processors" or "modules", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "unit", "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

## Claims

1. Method of operating one or more wireless local area networks, comprising a number of user devices and a plurality of wireless access points, the method comprising:
- obtaining, for each user device connected to a respective serving access point from among the plurality of access points, connection data comprising an indicator for the serving access point; and
- calculating, for each connected user device, a mobility parameter based on the obtained connection data.

2. Method according to claim 1, further comprising:
- performing an enhancing function for enhancing the capacity and/or quality of the one or more wireless local area network for at least one of the plurality of access points based on the calculated mobility parameters.

3. Method according to claim 1 or 2, wherein the method is performed at a computing device that is configured to remotely manage the plurality of access points, the method further comprising:
- updating a database, comprising a list of the user devices and a list of the access points, with the obtained connection data and a time of obtaining the connection data.

4. Method according to claim 1, 2 or 3, wherein the mobility parameter is calculated based on connection data obtained for two or more times or time periods.

5. Method according to one of claims 1 to 4, wherein the connection data is obtained from the user device, from the plurality of access points, or both.

6. Method according to one of claims 1 to 5, wherein the connection data further comprises one or more of service set identifiers (SSID), basic service set identifiers (BSSID) being a label for the access points and the user devices, and/or received signal strength indicators (RSSI) for at least one of the plurality of access points at one or more user devices, wherein the indicator comprises a basic service set identifier for the respective serving access point.

7. Method according to one of claims 2 to 6, wherein the enhancing function comprises at least one of load balancing and interference management.

8. Method according to one of claims 1 to 7, wherein the mobility parameter indicates a probability of disconnecting by the user device from the serving access point,
wherein one or more of the user devices is preferably marked as a device suitable for connection to another respective serving access point when the probability of disconnecting for respective marked user devices is below a predetermined value, and
wherein the load balancing comprises connecting the marked user devices to respective another serving access points if the respective another serving access points are within a connection range of the respective marked user device and if the load of the respective another serving access points is lower than the load of the respective serving access points.

9. System for operating one or more wireless local area networks comprising a number of user devices and a plurality of wireless access points, the system comprising:
- an obtaining unit configured to obtain, for each respective user device connected to a serving access point from among the plurality of access points, connection data comprising an indicator for the respective serving access point; and
- a processor configured to calculate, for each connected user device, a mobility parameter based on the obtained connection data.

10. System according to claim 9, wherein the processor is further configured to perform an enhancing function for enhancing the capacity and/or quality of the wireless local area network for at least one of the plurality of access points based on the calculated mobility parameter.

11. System according to claim 9 or 10, further comprising a computing device that is configured to remotely manage the plurality of access points and a storage device for storing a database comprising a list of the user devices and a list of the access points, wherein the computing device is further configured to update the database with the obtained connection data and a time of obtaining the connection data.

12. System according to one of claims 9, 10 or 11, wherein the obtaining unit is configured to obtain the connection data from the user device, from the plurality of access points, or both, and/or
wherein the connection data further comprises one or more of service set identifiers (SSID), basic service set identifiers (BSSID) being a label for the access points and the user devices, and/or received signal strength indicators (RSSI) for at least one of the plurality of access points at one or more user devices, wherein the indicator comprises a basic service set identifier for the respective serving access point.

13. System according to any one of claims 10 to 12, wherein the enhancing function comprises at least one of load balancing and interference management.

14. System according to one of claims 9 to 13, wherein the mobility parameter indicates a probability of disconnecting by the user device from the serving access point,
wherein one or more of the user devices is preferably marked as a device suitable for connection to another respective serving access point when the probability of disconnecting for respective marked devices is below a predetermined value, and
wherein the load balancing comprises connecting the marked user devices to respective another serving access points if the respective another serving access points are within a connection range of the respective marked user device and if the load of the respective another serving access points are lower than the load of the respective serving access points.

15. Computer program product comprising computer-executable instructions for performing the method of any one of the claims 1 to 8, when the program is run on a computer.
